# EUROPÄISCHE PATENTSCHRIFT

(11) **EP 2 620 343 B1**
(45) Veröffentlichungstag und Bekanntmachung des Hinweises auf die Patenterteilung: **27.03.2019**
(21) Anmeldenummer: 13151464.8
(22) Anmeldetag: 16.01.2013
(51) Int. Cl.: B60W 20/00, B60K 6/48, B60W 50/00, B60W 30/188, B60W 20/40, B60W 20/12

(54) **Verfahren zum Betrieb einer Hybridantriebseinheit für ein Kraftfahrzeug sowie Hybridantriebseinheit**
Method for operating a hybrid drive unit for a motor vehicle and hybrid drive unit
Procédé d'entraînement d'une unité d'entraînement hybride pour un véhicule automobile et unité d'entraînement hybride

(30) Priorität: 28.01.2012 DE 102012001740
(43) Veröffentlichungstag der Anmeldung: 31.07.2013
(73) Patentinhaber: Volkswagen Aktiengesellschaft, 38440 Wolfsburg (DE)
(72) Erfinder: Zillmer, Dr. Michael, 38173 Sickte (DE); Prochazka, David, 38448 Wolfsburg (DE); Fugel, Dr. Markus, 38114 Braunschweig (DE)

(56) Entgegenhaltungen:
- JP-A- 2010 143 423
- US-A1- 2009 259 355
- US-A1- 2009 277 701
- US-A1- 2011 087 391
- US-A1- 2011 172 867

## Beschreibung

Die Erfindung betrifft ein Verfahren zum Betrieb einer Hybridantriebseinheit für ein Kraftfahrzeug, sowie eine zur Ausführung des Verfahrens eingerichtete Hybridantriebseinheit. Die Hybridantriebseinheit umfasst mindestens einen Elektromotor als erste Antriebsquelle sowie einen Verbrennungsmotor als zweite Antriebsquelle, wobei der Elektromotor durch einen Energiespeicher mit elektrischer Energie versorgt wird und der Energiespeicher über eine externe Stromquelle wiederaufladbar ist.

Der Begriff Hybridfahrzeug bezeichnet Kraftfahrzeuge, bei denen mindestens zwei Antriebsquellen miteinander kombiniert werden, die auf unterschiedliche Energiequellen zurückgreifen, um die Leistung für den Fahrzeugantrieb (Traktion) bereitzustellen. Besonders vorteilhaft ergänzen sich die Eigenschaften eines Verbrennungsmotors, der durch die Verbrennung von Benzin- oder Dieselkraftstoffen kinetische Energie erzeugt, und einer elektrischen Maschine (Elektromotor), die elektrische Energie in Bewegungsenergie umsetzt. Heutige Hybridfahrzeuge sind deshalb überwiegend mit einer Kombination aus Verbrennungsmotor und einem oder mehreren Elektromotor/en ausgestattet. Es lassen sich verschiedene Hybridkonzepte unterscheiden. Bei den so genannten seriellen Hybridkonzepten erfolgt der Fahrzeugantrieb ausschließlich über den Elektromotor, während der Verbrennungsmotor über einen separaten Generator den elektrischen Strom für die Aufladung eines, den Elektromotor speisenden Energiespeichers beziehungsweise für die direkte Speisung des Elektromotors erzeugt. Demgegenüber werden heute zumindest in PKW-Anwendungen parallele oder auch leistungsverzweigte Hybridkonzepte bevorzugt, bei denen der Fahrzeugantrieb sowohl durch den Verbrennungsmotor als auch durch den Elektromotor dargestellt werden kann. Die vorliegende Erfindung betrifft insbesondere derartige Hybridkonzepte.

Die in solchen Hybridkonzepten eingesetzten Elektromotoren lassen sich üblicherweise wahlweise motorisch oder generatorisch betreiben. Im verbrennungsmotorischen Fahrantrieb wird der Elektromotor überwiegend generatorisch betrieben, wobei eine so erzeugte elektrische Leistung des Elektromotors zur Aufladung des Energiespeichers und/oder zur Versorgung eines elektrischen Bordnetzes genutzt wird. Im Falle eines leistungsverzweigten Hybridkonzepts mit mehr als einem Elektromotor kann der generatorische Betrieb eines Elektromotors auch zur Speisung eines weiteren genutzt werden. Demgegenüber wird der Elektromotor im motorischen Betrieb typischerweise in Betriebspunkten mit höheren Fahrzeuglasten, unterstützend zum Verbrennungsmotor zugeschaltet (Boost-Funktion), das heißt es wird beispielsweise beim Parallelhybrid eine Momentenaddition des verbrennungsmotorischen und des elektromotorischen Moments durchgeführt. Zudem kann der Elektromotor die Funktion eines Anlassermotors für den Verbrennungsmotor übernehmen. Generell ist in Hybridkonzepten von Vorteil, dass die Elektromotoren gegenüber konventionellen Klauenpolgeneratoren mit besseren Wirkungsgraden z. B. bei der Stromerzeugung arbeiten.

Ferner ist bekannt, bei Schub- oder Bremsvorgängen zumindest einen Teil einer angeforderten Bremsleistung durch den generatorisch betriebenen Elektromotor aufzubringen (Rekuperation, "regeneratives Bremsen"), wobei ein Teil der mechanischen Verlustenergie in elektrische Energie umgewandelt wird. Auf diese Weise dient der Elektromotor der energieschonenden Erzeugung eines Bremsmomentes (= Rekuperationsmoment) und gleichzeitig der Ladung des Energiespeichers.

Neben der Möglichkeit, den Energiespeicher durch generatorischen Betrieb des Elektromotors zu laden, sind auch Konzepte entwickelt worden, bei denen der Energiespeicher über eine externe Stromquelle aufgeladen wird, beispielsweise beim Parken über Nacht. Diese so genannten Plug-in-Hybridfahrzeuge (PHEV für plug-in hybrid vehicle), weisen üblicherweise einen größeren Energiespeicher (Hochvolt(HV)-Batterie) auf als Hybridkonzepte ohne eine solche Möglichkeit der externen Batterieladung. Gemäß einer im Rahmen der vorliegenden Erfindung besonders interessierenden Entwicklungslinie sind die Plug-in-Hybridfahrzeuge so ausgelegt, dass der Elektromotor als Primärantrieb genutzt wird und der Verbrennungsmotor im Wesentlichen nur in Hochlastsituationen unterstützend zum Elektromotor zugeschaltet wird oder als alleinige Antriebsquelle in Betriebsbereichen mit besonders hohem verbrennungsmotorischen Wirkungsgrad betrieben wird. Zudem wird der Verbrennungsmotor dann zugeschaltet, wenn der Ladezustand des Energiespeichers einen unteren Grenzwert erreicht hat und der Fahrzeugvortrieb nicht mehr ausschließlich über den elektrischen Antrieb erfolgen kann.

Aus EP 1 347 887 A ist eine parallele Antriebseinheit bekannt, bei der die Betriebsstrategie zur Aufteilung der verbrennungsmotorischen und elektromotorischen Antriebsanteile die Kosten für den Betrieb des Verbrennungsmotors sowie die Kosten für den Betrieb des Elektromotors berücksichtigt. Insbesondere werden auch Umweltfaktoren in Form der verbrennungsmotorischen Emissionen sowie die Energieerzeugungskosten für den Betrieb des Elektromotors betrachtet. Der elektromotorische Antrieb erfolgt nur dann, wenn sein Nutzen größer ist als seine Kosten.

IN 01389MU2010 A (entsprechend US 2011/0087391 A1) beschreibt ein Plug-in-Hybridkonzept, bei dem ebenfalls der Verbrennungsmotor als Primärantriebsquelle und der Elektromotor als unterstützende Sekundärantriebsquelle betrieben wird. Gemäß einer Ausgestaltung erfolgt die Vorbestimmung der elektromotorischen Unterstützung des Verbrennungsmotors in Abhängigkeit von einer durch einen Nutzer eingegebene Entfernung einer zurückzulegenden Strecke sowie eines aktuellen Ladungszustandes eines Energiespeichers. Unterschreitet während des Betriebs der Hybridantriebseinheit der Ladungszustand des Energiespeichers eine zulässige Grenze, wird die motorische Unterstützung durch den Elektromotor beendet und der Betrieb allein durch den Verbrennungsmotor fortgesetzt.

Im Dokument US 2011/0172867 A1 werden aktive Energie-Management-Strategien zum Laden von Batterien von Plug-In-Hybridfahrzeugen beschrieben. Eine Hybridantriebseinheit weist einen Elektromotor als erste Antriebsquelle und einen Verbrennungsmotor als zweite Antriebsquelle auf. Der Elektromotor wird durch einen Energiespeicher mit elektrischer Energie versorgt, wobei der Energiespeicher über einen Ladeanschluss durch eine externe Stromquelle wieder aufgeladen werden kann. Ausgehend von einem Startpunkt mit einer Startladezustand der Batterie (initial SOC) wird bis zu einem Endpunkt mit einem Endladezustand der Batterie (targeting battery SOC) wird für die Fahrt ein Entladungsprofil erzeugt. Für das Entladungsprofil werden unter anderem Verkehrsinformationen, Wegeinformationen, Fahrzeugzustände und von einem Fahrer ausgewählte Betriebsvorgaben berücksichtigt. Das Entladungsprofil gibt den erwarteten Verbrauch an elektrischer Energie an und dient als Referenz für die Energie-Management-Strategie, so dass der tatsächliche Ladezustand der Batterie (battery SOC) in der Nähe der Referenz gehalten wird. Zum Ausgleich einer Abweichung gelangt ein PID oder Fuzzy-Logik Regler zum Einsatz, mit welchem die Verbrauchsraten-Parameter für elektrische und kraftstoffbasierte Energie verändert werden, zum Beispiel das Verhältnis der Leistungen von Elektromotor und Verbrennungsmotor. Auf diese Weise wird die Effizienz der Energienutzung des Plug-In-Hybridfahrzeugs gesteigert.

Das Dokument US 2009/0259355 A1 betrifft ein Hybridfahrzeug mit einer Batterie und Verfahren zum Bestimmen und Anwenden von Leistungsverhältnissen von Leistungsquellen in Hybridfahrzeugen. Ein erstmalig für eine Fahrt etabliertes Leistungsverhältnis zwischen einer elektrischen Leistungsquelle und einer nicht-elektrischen Leistungsquelle wird nach Bestimmung des Ladezustands der Batterie während der Fahrt erneut berechnet, um sicherzustellen, dass der Ladezustand eine definierte Schwelle am Ende der Fahrt erreicht.

Im Dokument US 2009/0277701 A1 wird der Betrieb eines Hybridfahrzeugs mit einem Verbrennungsmotor, einem Elektromotor und einer Batterie beschrieben, bei dem ein Ladezustandszielwert (SOC target) der Batterie in einer SOC Region mit einem bestimmten Verlust an einem vorbestimmten Punkt einer Fahrt vorgegeben wird, an welchem die verbleibende Fahrtdistanz zu einem Ladepunkt geringer als eine vorbestimmte Fahrtdistanz ist, so dass das Hybridfahrzeug elektrisch durch Verbrauch aus der Batterie die Fahrtdistanz durchfahren kann. Der Ladezustandszielwert kann auf einen Wert in einer SOC Region mit geringerem Verlust angepasst werden, wenn die verbleibende Fahrtdistasnz größer ist. Dabei wird die Aufteilung der Antriebsleistung auf Verbrennungsmotor und Elektromotor gesteuert.

Der Erfindung liegt die Aufgabe zugrunde, eine Betriebsstrategie für eine Plug-in-Hybridantriebseinheit zur Verfügung zu stellen, mit der die Gesamtbetriebskosten sowie die Emissionen insbesondere von CO₂ gesenkt werden.

Diese Aufgabe wird durch ein Verfahren sowie durch eine Hybridantriebseinheit mit den Merkmalen der unabhängigen Ansprüche gelöst.

Das Verfahren betrifft die Steuerung einer Hybridantriebseinheit für ein Fahrzeug, wobei die Hybridantriebseinheit wenigstens einen Elektromotor als erste Antriebsquelle und einen Verbrennungsmotor als zweite Antriebsquelle aufweist. Der Elektromotor wird durch einen Energiespeicher, insbesondere eine Hochvolt-Batterie, mit elektrischer Energie versorgt, wobei der Energiespeicher einen Ladeanschluss zur Wiederaufladung durch eine externe Stromquelle aufweist. Es handelt sich somit um eine Plug-in-Hybridantriebseinheit (PHEV). Das erfindungsgemäße Verfahren umfasst die Schritte:
- Empfang von Streckendaten einer geplanten zurückzulegenden Strecke;
- Ermittlung einer voraussichtlich erforderlichen Gesamtantriebsleistung für die geplante Strecke;
- Ermittlung einer Betriebsstrategie für die geplante Strecke in Abhängigkeit von der voraussichtlich erforderlichen Gesamtantriebsleistung, und
- Steuerung der Hybridantriebseinheit entsprechend der ermittelten Betriebsstrategie zur Zurücklegung der Strecke
wobei die Betriebsstrategie eine betriebspunktabhängige Umschaltgrenze zwischen einem elektromotorischen Antrieb und einem verbrennungsmotorischem Antrieb umfasst und wobei die Ermittlung der Umschaltgrenze so erfolgt, dass, wenn die voraussichtlich erforderliche Gesamtantriebsleistung größer oder gleich eines verfügbaren elektrischen Energieinhalts des Energiespeichers ist, ein nach Zurücklegung der Strecke voraussichtlich erreichter Ladungszustand des Energiespeichers einen vorbestimmten Wert erreicht und gegebenenfalls notwendige verbrennungsmotorischen Antriebsanteile wirkungsgradoptimiert gewählt werden.

Gemäß der vorliegenden Erfindung wird somit die Betriebsstrategie für die geplante zurückzulegende Strecke so vorbestimmt, dass einerseits zum Ende der Fahrstrecke der nutzbare Energieinhalt des Energiespeichers möglichst weit ausgenutzt ist. Sofern der Einsatz des Verbrennungsmotors zur Darstellung der erforderlichen Gesamtantriebsleistung überhaupt erforderlich ist, werden die notwendigen verbrennungsmotorischen Antriebsanteile so gewählt, dass diese in Betriebsbereichen mit einem möglichst hohen verbrennungsmotorischen Wirkungsgrad eingesetzt werden. Dieses Konzept führt zu einer Minimierung des Kraftstoffverbrauchs für den Betrieb des Verbrennungsmotors und somit zu einer Minimierung der CO₂ Emissionen für beliebige Fahrstrecken.

Nach einer bevorzugten Ausgestaltung erfolgt die Ermittlung der betriebspunktabhängigen Umschaltgrenze der Betriebsstrategie so, dass, wenn die voraussichtlich erforderliche Gesamtantriebsleistung für die geplante Strecke größer oder gleich des verfügbaren elektrischen Energieinhalts des Energiespeichers ist, der nach Zurücklegung der Strecke voraussichtlich erreichte Ladungszustand des Energiespeichers (das heißt der angestrebte Endladungszustand SOC_end) höchstens 30 %, vorzugsweise höchstens 20 %, besonders bevorzugt höchstens 10 %, beträgt. Dabei beziehen sich die Angaben des angestrebten Endladungszustandes auf den Gesamtenergieinhalt des Energiespeichers, also der (theoretischen) SOC-Spanne zwischen einem maximal geladenen Speicher (SOC = 100 %) und einem vollkommen entleerten Speicher (SOC = 0 %). Zu beachten ist dabei, dass in der Praxis ein maximal zulässiger Ladungszustand üblicherweise etwas kleiner als 100 % und ein minimal zulässiger Ladungszustand größer als 0 % ist. Der angestrebte Endladungszustand liegt bevorzugt etwas oberhalb des minimal zulässigen Ladungsstandes, um auch nach dem Start des Verbrennungsmotors noch eine Energiereserve für hybridische Fahrfunktionen wie z. B. den Boostbetrieb vorzuhalten. Eine ideale Verfahrensführung ist erreicht, wenn der Energieinhalt des Energiespeichers am Ende der zurückgelegten Fahrstrecke möglichst voll ausgeschöpft ist, das heißt der Endladungszustand SOC_end erreicht ist. Somit wird ein möglichst großer Anteil der voraussichtlich erforderlichen Gesamtantriebsleistung für die Strecke durch den Elektromotor bzw. durch elektrische Energie aus dem Energiespeicher dargestellt und die verbrennungsmotorischen Einsätze werden minimiert.

Nach einer bevorzugten Ausgestaltung des Verfahrens wird ein tatsächlicher Einsatz des Verbrennungsmotors, umfassend einen Start und/oder eine Abschaltung desselben, von der Erfüllung weiterer vorbestimmter Randbedingungen abhängig gemacht. So kann eine Randbedingung beispielsweise erfordern, dass der Verbrennungsmotor insbesondere nach einem Erststart eine bestimmte Mindesttemperatur (z. B. Kühlmittel- oder Öltemperatur) von beispielsweise 20°C, insbesondere 40°C, vorzugsweise 60°C, erreicht hat, bevor er wieder abgeschaltet wird. Darüber hinaus kann eine weitere Randbedingung fordern, ein Abgasnachbehandlungssystem auf eine Mindesttemperatur von beispielsweise 400°C, insbesondere 500°C, vorzugsweise 600°C aufzuheizen, ehe der Verbrennungsmotor gestartet wird, um mit Beginn des verbrennungsmotorischen Betriebs eine ausreichend hohe Schadstoffkonvertierungsrate zu gewährleisten. In diesem Fall kann die Aufheizung insbesondere durch eine elektrische Katalysatorbeheizung erfolgen. Ebenso kann das Erreichen dieser Mindesttemperatur des Abgasnachbehandlungssystems als Bedingung für das Abschalten des Verbrennungsmotors gemacht werden, wobei hier die Aufheizung durch den Verbrennungsmotorbetrieb selbst oder alternativ eine elektrische Katalysatorbeheizung erfolgen kann.

In besonders bevorzugter Ausführung des Verfahrens umfasst die Ermittlung der Betriebsstrategie auch eine Ermittlung eines prognostizierten Verlaufs des Ladezustandes des Energiespeichers über die geplante Strecke. Während der späteren Steuerung der Hybridantriebseinheit zur Zurücklegung der Strecke erfolgt dann wenigstens einmalig ein Vergleich eines aktuellen Ladungszustandes mit dem für diesen Zeitpunkt beziehungsweise Abschnitt prognostizierten Ladungszustand des Energiespeichers. Wird bei dieser Gelegenheit festgestellt, dass eine Mindestabweichung zwischen dem aktuellen und dem prognostizierten Ladungszustand des Energiespeichers vorliegt, erfolgt eine Adaption der betriebspunktabhängigen Umschaltgrenze zwischen dem elektromotorischen und dem verbrennungsmotorischen Antrieb für die verbleibende Strecke. Es versteht sich dabei, dass diese Anpassung der Umschaltgrenze unter Berücksichtigung der oben genannten Kriterien erfolgt, das heißt mit der Maßgabe der möglichst weitgehenden Ausschöpfung des zur Verfügung stehenden Energieinhalts des Energiespeichers und dem möglichst wirkungsgradoptimierten Einsatz des Verbrennungsmotors. Wird bei diesem SOC-Abgleich beispielsweise festgestellt, dass der Ladungszustand schneller abnimmt als vorausgesagt, wird die Umschaltgrenze so verschoben, dass der verbrennungsmotorische Betrieb bereits in geringeren Lastbereichen erfolgt. Hierdurch werden die elektromotorischen Betriebsanteile zugunsten der verbrennungsmotorischen Betriebsanteile vermindert und der SOC-Abfall verlangsamt. Ergibt der SOC-Abgleich hingegen eine langsamere Abnahme des Ladungszustandes des Energiespeichers als vorausgesagt, wird die Umschaltgrenze so verschoben, dass die elektromotorischen Antriebsanteile gegenüber den verbrennungsmotorischen Antriebsanteilen vergrößert werden. Auf diese Weise wird vermieden, dass am Ende der zurückgelegten Strecke noch eine große Menge ungenutzten Energieinhalts im Energiespeicher vorliegt.

Alternativ oder zusätzlich zu der vorstehend beschriebenen Adaption der Umschaltgrenze bei abweichendem SOC-Verlauf kann auch eine aktive Aufladung des Energiespeichers durch generatorischen Betrieb des Elektromotors durchgeführt werden, wobei der Verbrennungsmotor mit einem entsprechend höheren Lastpunkt betrieben wird. Diese Strategie entspricht der für Hybridantriebseinheiten ohne externe Aufladungsmöglichkeit des Energiespeichers üblichen Vorgehensweise, bei der der Energiespeicher bei Erreichen einer vorbestimmten unteren SOC-Grenze regelmäßig durch generatorischen Betrieb des Elektromotors geladen werden muss, wenn keine Betriebssituationen auftreten, die eine regenerative Energieerzeugung erlauben. Diese Option der aktiven Aufladung des Energiespeichers ist im Rahmen der Erfindung gegenüber der Adaption der Umschaltgrenze jedoch weniger bevorzugt. Grundsätzlich wird im Rahmen der Erfindung angestrebt, außer regenerative Aufladungen keine aktiven Aufladungsmaßnahmen des Energiespeichers im Fahrbetrieb durchzuführen.

Vorzugsweise erfolgt der Vergleich des aktuellen Ladungszustandes mit dem prognostizierten Ladungszustand des Energiespeichers sowie Adaption der Betriebsstrategie (also der betriebspunktabhängigen Umschaltgrenze und gegebenenfalls der Lastpunktverschiebung des Verbrennungsmotors zur Aufladung des Energiespeichers) in regelmäßigen Intervallen, insbesondere jeweils nach Zurücklegung einer vorbestimmten Distanz und/oder nach Ablauf einer vorbestimmten Fahrdauer. Auf diese Weise kann der verbleibende Energieinhalt des Energiespeichers besonders effizient über die Strecke genutzt werden, auch wenn der tatsächliche Fahrverlauf von dem prognostizierten abweicht.

Typischerweise handelt es sich bei der betriebspunktabhängigen Umschaltgrenze um eine Kennlinie, die von einer Drehzahl und einem Drehmoment einer Antriebsachse der Hybridantriebseinheit oder einer die Antriebsachse antreibenden Ausgangswelle der Hybridantriebseinheit abhängt.

In einer bevorzugten Ausführungsform des Verfahrens wird die betriebspunktabhängige Umschaltgrenze mit einer Hysterese vorgegeben. In diesem Fall umfasst sie eine erste Umschaltgrenze zur Umschaltung von einem elektromotorischen in einen verbrennungsmotorischen Antrieb sowie eine zweite Umschaltgrenze zur Umschaltung von einem verbrennungsmotorischen in einen elektromotorischen Antrieb. Dabei ist die zweite gegenüber der ersten Umschaltgrenze dergestalt verschoben, dass sie bei niedrigeren Drehzahlen und/oder niedrigeren Drehmomenten als die erste Umschaltgrenze verläuft. Durch die Vorsehung einer solchen Hysterese werden häufige Betriebsartenumschaltungen aufgrund geringfügiger Betriebspunktschwankungen vermieden, die unkomfortabel und uneffizient sind.

Die zur Ermittlung der Betriebsstrategie eingelesenen Streckendaten der geplanten Strecke können (in einem einfachen Fall) eine voraussichtliche Entfernung und/oder Fahrtdauer umfassen, die beispielsweise von einem Nutzer über eine Tastatur, über ein Touchscreen oder über eine mittels einer Spracherkennung erfassten akustischen Eingabe eingegeben werden können. Besonders bevorzugt umfassen die Streckendaten zumindest eine der folgenden Informationen: ein konkretes Ziel, Straßenarten (Autobahn, Landstraße, einfache städtische Straßen), geographische oder topologische Streckeninformationen (insbesondere Steigungen und Gefälle), Bebauungsinformationen, Geschwindigkeitsbegrenzungen, aktuelle Verkehrsinformationen und/oder eine zu erwartende Verkehrsdichte umfassen. Derartige Informationen können nach Eingabe des konkreten Ziels durch den Nutzer etwa auf eine der oben genannten Arten von einem Navigationssystem erfasst und übermittelt werden. Je mehr und je detailliertere Streckendaten zur Festlegung der Betriebsstrategie berücksichtigt werden, desto genauer kann die voraussichtlich erforderliche Gesamtantriebsleistung für die geplante Strecke ermittelt werden.

Sofern der Elektromotor der Hybridantriebseinheit neben seinem elektromotorischen Betrieb auch generatorisch zur Erzeugung elektrischer Energie betrieben werden kann, sieht eine bevorzugte Ausführung des Verfahrens vor, eine voraussichtliche generatorisch erzeugte Energie bei der Zurücklegung der geplanten Strecke bei der Ermittlung der voraussichtlichen Gesamtantriebsleistung zu berücksichtigen. Insbesondere wird zu diesem Zweck eine voraussichtliche regenerativ erzeugte Energie berücksichtigt. Dabei handelt es sich um Betriebssituationen, in denen ein Überschuss kinetischer Energie des Fahrzeugs vorliegt, beispielsweise bei Bremsvorgängen, bei Gefällen oder im Schubbetrieb, wobei dieser Energieüberschuss zum Antrieb des generatorischen Betriebs des Elektromotors und somit zur Erzeugung elektrischer Energie und Aufladung des Energiespeichers genutzt wird. Durch die Berücksichtigung der voraussichtlichen generatorisch erzeugten Energie steigt die Genauigkeit der Ermittlung der erforderlichen Gesamtantriebsleistung.

Eine weitere vorteilhafte Ausgestaltung sieht vor, dass zusätzlich ein voraussichtlicher elektrischer Leistungsbedarf eines elektrischen Bordnetzes des Fahrzeugs für die geplante Strecke ermittelt wird und bei der Ermittlung der Betriebsstrategie und/oder des verfügbaren Energieinhalts des Energiespeichers berücksichtigt wird. Dabei werden die vorhandenen elektrischen Niedervoltverbraucher des Fahrzeugbordnetzes sowie insbesondere auch installierte Hochvoltverbraucher (z. B. ein elektrischer Klimakompressor, ein Hochvolt-Zuheizelement), die zur Entladung des Energiespeichers beitragen, berücksichtigt. Insbesondere kann der prognostizierte elektrische Bordnetzleistungsbedarf von dem vorhandenen Energieinhalt des Energiespeichers abgezogen werden, um einen für den elektromotorischen Abtrieb tatsächlich verfügbaren Energieinhalt zu ermitteln. Die Prognose dieses elektrischen Leistungsbedarfs kann beispielsweise auf Basis der zu Fahrtbeginn vorliegenden Umgebungstemperatur und/oder einer vom Fahrer voreingestellten Soll-Innenraumtemperatur und/oder einer vorgegebenen Soll-Heizleistung abgeschätzt werden. Alternativ kann auf typische streckenbezogene Erfahrungswerte zurückgegriffen werden. Auf Basis von im Fahrzeugbetrieb tatsächlich gemessenen Werten kann nachträglich eine Korrektur erfolgen.

Die Erfindung betrifft weiterhin eine Hybridantriebseinheit für ein Fahrzeug, die durch Mittel gekennzeichnet ist, welche eingerichtet sind, die Hybridantriebseinheit gemäß dem erfindungsgemäßen Verfahren zu steuern. Diese Mittel umfassen insbesondere eine Steuereinheit, die insbesondere einen computerlesbaren Algorithmus zur Ausführung des Verfahrens sowie notwendige Kennfelder und Kennlinien umfasst.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen erläutert. Es zeigen:
- Figur 1: ein Blockschaltbild einer Hydridantriebseinheit nach einer bevorzugten Ausführung der Erfindung;
- Figur 2: ein Fließdiagramm zum Ablauf eines Verfahrens zur Steuerung eines Betriebs einer Hydridantriebseinheit nach einer bevorzugten Ausführung der Erfindung;
- Figur 3: ein Betriebskennfeld mit einer Umschaltgrenze zur Steuerung eines Betriebs einer Hydridantriebseinheit gemäß einer mit dem erfindungsgemäßen Verfahren ermittelten Betriebsstrategie und
- Figur 4: Verläufe eines Ladungszustandes eines Energiespeichers, einer Fahrzeuggeschwindigkeit sowie verbrennungsmotorischer Anteile während der erfindungsgemäßen Steuerung einer Hydridantriebseinheit für drei verschiedene Strecken.

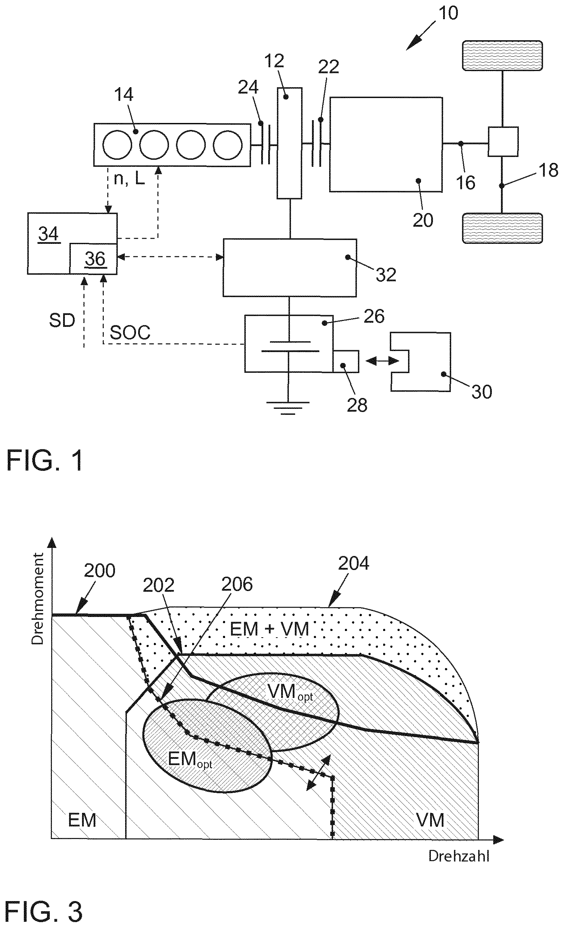

In Figur 1 ist mit 10 insgesamt eine parallele Hybridantriebseinheit eines im Einzelnen nicht weiter dargestellten Hybridfahrzeugs bezeichnet. Der Antrieb des Fahrzeugs erfolgt wahlweise oder gleichzeitig durch einen Elektromotor 12 (elektrische Maschine, E-Maschine) als eine erste Antriebsquelle sowie einen Verbrennungsmotor 14 (Otto- oder Dieselmotor) als eine zweite Antriebsquelle. Beide Antriebsquellen 12 und 14 wirken direkt oder indirekt auf eine Antriebswelle 16, welche eine Antriebsachse 18 des Fahrzeugs antreibt. Beispielsweise kann der Elektromotor 12 auf die Kurbelwelle des Verbrennungsmotors 14 wirken, an die er auf verschiedene Weise angebunden sein kann. So kann der Elektromotor 12 über eine Kupplung mit der Kurbelwelle verbunden sein oder über einen Riemenantrieb oder ein Getriebe oder einer anderen schaltbaren kraft- und/oder formschlüssigen Verbindung oder auch in das Fahrzeuggetriebe integriert sein, wenn durch Öffnen einer form- oder kraftschlüssigen Verbindung der Elektromotor vom Verbrennungsmotor abgekoppelt werden kann. Verbrennungsmotor 14 und Elektromotor 12 sind über ein Getriebe 20 mit der Antriebswelle 16 verbunden. Das Getriebe 20 kann alternativ als Automatikgetriebe oder als Doppelkupplungsgetriebe ausgebildet sein.

In Figur 1 ist die zusätzliche Kupplung 24 dargestellt, die zwischen Verbrennungsmotor 14 und Elektromotor 12 angeordnet ist. Eine solche zusätzliche Kupplung 24 erlaubt die separate Abkopplung des Verbrennungsmotors 14 vom Antriebsstrang beziehungsweise vom Elektromotor 12, wodurch bei ausgeschaltetem Verbrennungsmotor 14 seine mechanischen Reibungswiderstände nicht mitgeschleppt werden müssen.

Der Elektromotor 12, der beispielsweise ein Drehstrom-Asynchronmotor oder -Synchronmotor ist, kann wahlweise im elektromotorischen Betrieb mit einem positiven Antriebsmoment, das allein oder zusammen mit dem Moment des Verbrennungsmotors 14 ein Gesamtantriebsmoment der Hybridantriebseinheit 10 darstellt, betrieben werden oder im Generatorbetrieb mit einem negativen elektromotorischen Moment, das einem Bremsmoment oder Rekuperationsmoment entspricht. Im motorischen Betrieb treibt der Elektromotor 12 die Antriebswelle 16 - allein oder durch das verbrennungsmotorische Moment des Verbrennungsmotors 14 unterstützt - unter Verbrauch von elektrischer Energie (Strom) an. Diese bezieht der Elektromotor 12 aus einem Energiespeicher 26, der insbesondere eine wiederaufladbare Hochvolt-Batterie ist. Im generatorischen Betrieb hingegen wird der Elektromotor 12 durch den Verbrennungsmotor 14 oder einen Schubbetrieb des Fahrzeugs angetrieben und wandelt die kinetische Energie in elektrische Energie zur Ladung des Energiespeichers 26 oder zur Versorgung eines nicht dargestellten Bordstromnetzes um. Zusätzlich weist der Energiespeicher 26 einen Ladeanschluss 28 zur Wiederaufladung durch eine externe Stromquelle 30 auf.

Die Umschaltung des Elektromotors 12 zwischen Motor- und Generatorbetrieb erfolgt durch eine Leistungselektronik 32, die gleichzeitig eine möglicherweise erforderliche Umrichtung zwischen Gleich- und Wechselstrom vornimmt.

Die Steuerung des Betriebs des Verbrennungsmotors 14 sowie der Leistungselektronik 32 erfolgt durch ein Motorsteuergerät 34, in welches eine Steuerung (angedeutet mit 36) zur erfindungsgemäßen Steuerung des Betrieb der Hybridantriebseinheit 10 umfasst. Insbesondere umfasst die Steuerung 36 einen computerlesbaren Programmalgorithmus. Alternativ kann die Betriebssteuerung 36 auch in einer separaten Steuereinheit vorgesehen sein. In das Motorsteuergerät 34 bzw. die Betriebssteuerung 36 gehen verschiedene aktuelle Betriebsparameter des Fahrzeugs ein, wie eine Drehzahl n der Kurbelwelle des Verbrennungsmotors 14 oder der Antriebswelle 16 und eine Last L des Verbrennungsmotors 14. Des Weiteren erhält oder ermittelt das Motorsteuergerät 34 Informationen, die einen Ladungszustand SOC (state-ofcharge) des Energiespeichers 26 charakterisieren.

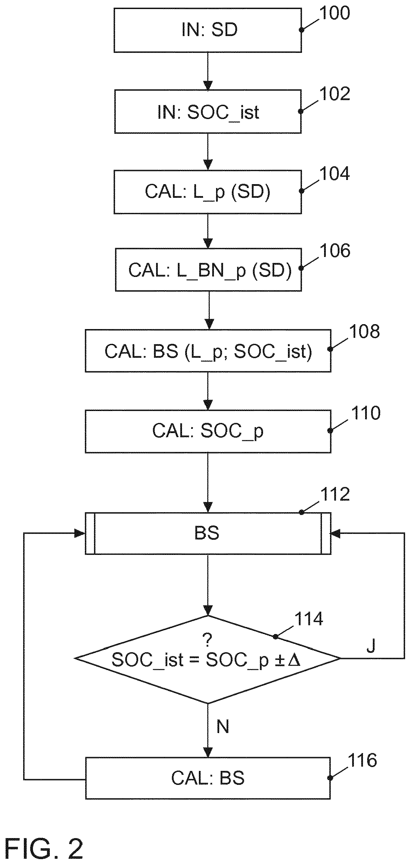

Die Durchführung und der Ablauf des erfindungsgemäßen Verfahrens zur Steuerung der Hybridantriebseinheit soll anhand der Figuren 2 bis 4 am Beispiel einer bevorzugten Ausgestaltung näher erläutert werden.

Das Verfahren gemäß Figur 2 beginnt in Schritt 100, in dem Streckendaten SD einer geplanten zurückzulegenden Strecke der Betriebssteuerung 36 eingelesen werden. In einem einfachen Fall können die Streckendaten SD eine voraussichtlich zurückzulegende Entfernung beinhalten, die von einem Fahrer beispielsweise manuell eingegeben wird. Alternativ kann der Fahrer ein konkretes Ziel der Strecke etwa in ein Navigationssystem eingeben, welches die genauere Streckendaten SD ermittelt, umfassend die Entfernung, die zu bereisenden Straßenarten (Autobahnabschnitte, Landstraßenabschnitte, städtische Abschnitte etc.), geographische und/oder topologische Streckeninformationen (insbesondere Gefälle und Steigungen), Geschwindigkeitsbegrenzungen, aktuelle Verkehrsinformationen und/oder eine unter Berücksichtigung der aktuellen Tages- und/oder Wochenzeit zu erwartende Verkehrsdichte.

In Schritt 102 wird der aktuelle Ladungszustand SOC_ist des Energiespeichers 26 eingelesen. Es versteht sich, dass anstelle des SOC-Wertes auch ein analoger Wert, beispielsweise die Entladungstiefe DOD (depths-of-discharge) verwendet werden kann.

Sodann geht das Verfahren zu Schritt 104 über, in dem in Abhängigkeit von den in Schritt 100 eingelesenen Streckendaten SD die voraussichtlich erforderliche Gesamtantriebsleistung L_p für die geplante Strecke ermittelt wird. Dabei handelt es sich um die gesamte elektromotorisch und/oder verbrennungsmotorisch aufzubringende Antriebsleistung, die für die Zurücklegung der Strecke erforderlich ist. In bevorzugter Ausführung kann in Schritt 104 bei der Ermittlung der Gesamtantriebsleistung L_p auch eine voraussichtlich regenerativ erzeugte Energie, welche die erforderliche Gesamtantriebsleistung L_p vermindert (oder den verfügbaren Inhalt des Energiespeichers erhöht), berücksichtigt werden. Liegen beispielsweise topologische Streckendaten vor, die längere Gefälleabschnitte erkennen lassen, so kann in Schritt 104 abgeschätzt werden, wie hoch die voraussichtlich regenerativ erzeugte Energiemenge sein wird, wenn der Elektromotor 12 während der Gefälleabschnitte generatorisch betrieben wird. Alternativ können auch typische regenerativ erzeugte Energiemengen angenommen werden, beispielsweise eine mittlere, entfernungsbezogene Energiemenge.

In einem anschließenden Schritt 106 wird ein voraussichtlicher elektrischer Leistungsbedarf L_BN_p eines elektrischen Bordnetzes des Fahrzeugs für die geplante Strecke ermittelt. Der voraussichtliche elektrische Leistungsbedarf L_BN_p betrifft die im Fahrzeug vorhandenen elektrischen Verbraucher, die zur Entladung des Energiespeichers beitragen, insbesondere Niedervolt- und Hochvoltverbraucher, wie etwa ein elektrischer Klimakompressor, ein Hochvolt-Zuheizelement oder dergleichen mehr. Die Prognose dieses Bedarfs, insbesondere von elektrischen Verbrauchern zur Kühlung und/oder Beheizung des Fahrzeuginnenraums, kann beispielsweise auf Basis der zu Fahrtbeginn vorliegenden Umgebungstemperatur und/oder einer vom Fahrer voreingestellten Soll-Innenraumtemperatur und/oder einer vorgegebenen Soll-Heizleistung abgeschätzt werden. Insbesondere in Abwesenheit derartiger Temperatur- oder Einstellungsinformationen können auch streckenbezogene Standard- oder Erfahrungswerte für die Ermittlung des prognostizierten Leistungsbedarfs L_BN_p verwendet werden.

In einem anschließenden Schritt 108 erfolgt die Bestimmung einer Betriebsstrategie BS in Abhängigkeit der zuvor ermittelten voraussichtlichen Gesamtantriebsleistung L_p und des voraussichtlichen elektrischen Leistungsbedarfs L_BN_p sowie in Abhängigkeit eines verfügbaren Energieinhalts des Energiespeichers 26. Dabei bestimmt sich der verfügbare Energieinhalt aus der Differenz des in Schritt 102 eingelesenen aktuellen Ladungszustandes SOC_ist zu einem Ladungszustand SOC_end, dessen Erreichen nach Zurücklegung der Strecke erfindungsgemäß angestrebt wird. Beispielsweise kann der angestrebte zu erreichende Ladungszustand SOC_end bei 30% oder 20 % liegen, in einer bevorzugten Ausgestaltung bei 10 % bezogen auf eine Gesamt-SOC-Spanne des Energiespeichers 26. Der voraussichtliche elektrische Leistungsbedarf L_BN_p kann in diesem Schritt korrigierend berücksichtigt werden, beispielsweise indem dieser von dem verfügbaren Energieinhalt abgezogen wird, um einen tatsächlich für den elektromotorischen Fahrzeugantrieb verfügbaren Energieinhalt zu erhalten.

Die in Schritt 108 ermittelte Betriebsstrategie BS beinhaltet insbesondere ein Kennfeldbereich für den elektromotorischen und den verbrennungsmotorischen Antrieb und wird anhand von Figur 3 beispielhaft erläutert. In Figur 3 bezeichnet die X-Achse die Drehzahl der Antriebswelle 16 oder der Antriebsachse 18 (siehe Figur 1) und die Y-Achse das für den Fahrzeugantrieb aufzubringende Drehmoment. Die Kennlinie 200 bezeichnet eine Volllastkennlinie des Elektromotors 12, das heißt ein maximales, allein durch den Elektromotor aufbringbares Drehmoment in Abhängigkeit von der Drehzahl. Des Weiteren bezeichnet der Graph 202 die Volllastkennlinie des Verbrennungsmotors 14, das heißt ein maximales, allein durch den Verbrennungsmotor in Abhängigkeit von der Drehzahl darstellbares Drehmoment. Unterhalb der Volllastkennlinien 200 und 202 liegende Betriebspunkte können somit durch alleinigen Betrieb des Elektromotors 12 beziehungsweise des Verbrennungsmotors 14 oder - in Überschneidungsbereichen - wahlweise durch den Elektromotor oder den Verbrennungsmotor dargestellt werden. Mit 204 ist darüber hinaus eine Volllastlinie dargestellt, die durch Momentenaddition bei gleichzeitigem Betrieb des Elektromotors 12 und des Verbrennungsmotors 14 dargestellt werden kann (Boost-funktion). Zusätzlich sind in Figur 3 Betriebsbereiche mit besonders hohem Wirkungsgrad des Elektromotors 12 (EMₒₚₜ) und des Verbrennungsmotors 14 (VMₒₚₜ) eingezeichnet.

Erfindungsgemäß umfasst die Betriebsstrategie ferner die Ermittlung einer Umschaltgrenze 206, die ebenfalls in Figur 3 beispielhaft eingezeichnet ist. Die Umschaltgrenze 206 bestimmt, ob bei einer gegebenen Drehzahl das darzustellende Drehmoment durch den Elektromotor 12 oder den Verbrennungsmotor 14 aufgebracht wird. Liegt der aktuelle Betriebspunkt links unterhalb der beispielhaft dargestellten Umschaltgrenze 206, so erfolgt die Darstellung des notwendigen Drehmoments allein durch den Elektromotor 12. Liegt andernfalls der Betriebspunkt rechts oberhalb der Umschaltgrenze 206, so wird das Drehmoment durch alleinigen Betrieb des Verbrennungsmotors 14 dargestellt oder, falls erforderlich, durch gleichzeitigen Betrieb von beiden.

Erfindungsgemäß wird die Umschaltgrenze 206 in Abhängigkeit von der in Schritt 104 ermittelten voraussichtlichen Gesamtantriebsleistung L_p sowie dem verfügbaren Energieinhalt (SOC_ist - SOC_end) des Energiespeichers 26 (insbesondere nach Abzug des voraussichtlichen Bordnetzbedarfs L_BN_p) so gewählt, dass ein möglichst großer Teil oder sogar die gesamte Strecke durch den elektromotorischen Antrieb bewerkstelligt werden kann. Falls jedoch die voraussichtlich erforderliche Gesamtantriebsleistung L_p größer ist als der verfügbare elektrische Energieinhalt des Energiespeichers 26, wird die Umschaltgrenze 206 so vorbestimmt, dass nach Zurücklegung der Strecke der verfügbare Energieinhalt des Energiespeichers weitestgehend ausgeschöpft wird, insbesondere den vorbestimmten Ladungsstand SOC_end erreicht. Gegebenenfalls notwendige verbrennungsmotorische Antriebsanteile werden dann gemäß Figur 3 so gewählt, dass diese in einem Kennfeldbereich liegen, in denen der Verbrennungsmotor einen möglichst hohen Wirkungsgrad aufweist. Das sind insbesondere die von den Kennlinien 202 und 206 begrenzte Bereich VM und besonders bevorzugt der wirkungsgradoptimale Bereich VMₒₚₜ.

Nach Bestimmung der Betriebsstrategie und insbesondere der Umschaltgrenze 206 in Schritt 108 der Figur 2 geht das Verfahren zu Schritt 110 über. In Schritt 108 erfolgt die Ermittlung eines prognostizierten Verlaufs des Ladungszustandes SOC_p als Funktion der zurückgelegten Strecke unter Berücksichtigung des voraussichtlichen Bordnetzbedarfs L_BN_p.

Sodann geht das Verfahren zu Schritt 112 über, in welchem die Fahrt beginnt und zu diesem Zweck die Hybridantriebseinheit 10 gemäß der zuvor ermittelten Betriebsstrategie BS gesteuert wird. Insbesondere werden somit die elektromotorischen und verbrennungsmotorischen Antriebsanteile in Abhängigkeit von einer aktuellen Drehzahl und einem aktuell angeforderten Drehmoment gemäß den Vorgaben der Betriebsstrategie nach Figur 3 vorgegeben.

Während der Fahrt wird in festgelegten Intervallen, beispielsweise jeweils nach Zurücklegung einer vorbestimmten Distanz oder nach Ablauf einer vorbestimmten Fahrtdauer eine Überprüfung und gegebenenfalls Adaption der Betriebsstrategie vorgenommen. Zu diesem Zweck geht das Verfahren zu der Abfrage 114 über, wo ein aktueller Ladungszustand SOC_ist des Energiespeichers erneut eingelesen wird und mit dem in Schritt 110 für diesen Zeitpunkt bzw. für diesen Streckenabschnitt prognostizierten Ladungszustand SOC_p verglichen wird. Wird in Schritt 114 festgestellt, dass der aktuelle Ladungszustand SOC_ist innerhalb eines Toleranzbereiches ±Δ des prognostizierten Ladungszustandes SOC_p liegt, ist keine Anpassung der Betriebsstrategie erforderlich. In diesem Fall geht das Verfahren zu Schritt 112 zurück, um die Hybridantriebseinheit gemäß der zuvor bestimmten Betriebsstrategie BS weiterhin zu betreiben.

Wird in der Abfrage in Schritt 114 hingegen festgestellt, dass die Mindestabweichung ±Δ von dem prognostizierten Ladungszustand SOC_p überschritten ist, das heißt der Energiespeicher schneller oder langsamer entladen wird als prognostiziert, geht das Verfahren zu Schritt116 über, um die Betriebsstrategie BS zu adaptieren. Die Adaption der Betriebsstrategie beinhaltet insbesondere eine geeignete Verschiebung der Umschaltgrenze 206. Falls der aktuelle Ladungszustand SOC_ist kleiner als der prognostizierten Ladungszustand SOC_p ±Δ ist, also eine zu schnelle Entladung vorliegt, erfolgt eine Verschiebung der Umschaltgrenze 206 in Richtung niedrigerer Drehzahlen und/oder niedrigerer Drehmomente (siehe Figur 3). Auf diese Weise werden die elektromotorischen Betriebsanteile zugunsten der verbrennungsmotorischen Anteile verringert und die Entladung des Energiespeichers verzögert. Wird in Schritt 114 hingegen festgestellt, dass der aktuelle Ladungsstand SOC_ist größer ist als SOC_p ±Δ, so wird die Umschaltgrenze 206 in Richtung höherer Drehzahl und/oder höherer Drehmomente verschoben, um somit eine bessere Ausnutzung des Energieinhaltes des Energiespeichers über die gesamte Strecke zu bewirken.

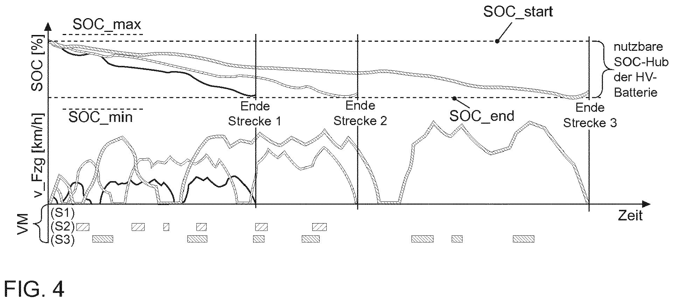

Typische Verläufe für den Ladungszustand SOC des Energiespeichers, die Fahrzeuggeschwindigkeit v_Fzg sowie die Betriebsanteile des Verbrennungsmotors VM sind in Figur 4 für drei unterschiedliche Strecken S1, S2 und S3 dargestellt.

Im Falle der Strecke S1 ist die zurückzulegende Distanz so kurz, dass der verfügbare Energieinhalt des Energiespeichers 26 ausreicht, um die Strecke rein elektromotorisch über den Betrieb des Elektromotors 12 zu fahren. Am Ende der Strecke S1 entspricht der Ladungszustand des Energiespeichers dem angestrebten Ladungsstand SOC_end, der beispielsweise bei 10 % bezogen auf den Gesamtenergieinhalt des Energiespeichers 26 liegt. Ein verbrennungsmotorischer Betrieb ist zur Zurücklegung der Strecke S1 nicht erforderlich (siehe Figur 4 unten). (Es versteht sich, dass bei Strecken, die eine noch geringere Gesamtantriebsleistung als die Strecke S1 erfordern, die verfügbare elektrische Energiemenge des Energiespeichers nicht voll ausgeschöpft wird. Vielmehr wird in diesem Fall der SOC am Ende der Strecke oberhalb von SOC_end liegen.)

Im Fall der Strecke S2 reicht der verfügbare Energieinhalt des Energiespeichers nicht aus, um die gesamte Antriebsleistung über den Elektromotor 12 darzustellen. Daher muss zeitweise der Verbrennungsmotor 14 zugeschaltet werden (siehe Figur 4 unten). Da jedoch auch bei dieser Betriebsstrategie der Energieinhalt des Energiespeichers weitestgehend ausgeschöpft wird (siehe Figur 4 oben), sind die verbrennungsmotorischen Anteile auf ein Minimum reduziert.

Bei der noch längeren Strecke S3 sind gegenüber der Strecke S2 ausgedehntere verbrennungsmotorische Betriebsintervalle erforderlich. Jedoch wird auch hier die Betriebsstrategie so ausgelegt, dass erst am Ende der Strecke S3 der Energiespeicher bis zu seinem angestrebten Endladungszustand SOC_end entleert ist.

Sowohl im Falle der Strecke S2 als auch von S3 werden die verbrennungsmotorisch aufgebrachten Antriebsintervalle so gelegt, dass der Verbrennungsmotor 14 einen relativ hohen Wirkungsgrad aufweist. Insbesondere erfolgt seine Zuschaltung dann, wenn das momentan erforderliche Antriebsmoment relativ hoch ist, wodurch sich der Verbrennungsmotor mit vergleichsweise guten Wirkungsgraden betreiben lässt.

Im Ergebnis erlaubt das erfindungsgemäße Verfahren die Zurücklegung beliebiger Fahrstrecken mit minimalen CO₂-Emissionen.

### Bezugszeichen / Abkürzungen

- 10: Hybridantriebseinheit
- 12: Elektromotor
- 14: Verbrennungsmotor
- 16: Antriebswelle
- 18: Antriebsachse
- 20: Getriebe
- 22: Kupplung
- 24: Kupplung
- 26: Energiespeicher
- 28: Ladeanschluss
- 30: externe Stromquelle
- 32: Leistungselektronik
- 34: Motorsteuergerät
- 36: Betriebssteuerung

- 200: Volllastkennlinie Elektromotor
- 202: Volllastkennlinie Verbrennungsmotor
- 204: Volllastkennlinie Elektromotor + Verbrennungsmotor
- 206: Umschaltgrenze

- SOC: Ladungszustand (state of Charge)
- SOC_end: voraussichtlich erreichter Endladungszustand
- SD: Streckendaten
- L_D: voraussichtlich erforderliche Gesamtantriebsleistung
- L_BN_p: voraussichtlicher elektrischer Leistungsbedarf des elektrischen Bordnetzes
- BS: Betriebsstrategie
- EM: Elektromotor
- VM: Verbrennungsmotor

## Patentansprüche

1. Verfahren zur Steuerung einer Hybridantriebseinheit (10) für ein Fahrzeug, wobei die Hybridantriebseinheit (10) mindestens einen Elektromotor (12) als erste Antriebsquelle und einen Verbrennungsmotor (14) als zweite Antriebsquelle aufweist und der Elektromotor (12) durch einen Energiespeicher (26) mit elektrischer Energie versorgt wird und der Energiespeicher (26) einen Ladeanschluss (28) zur Wiederaufladung durch eine externe Stromquelle (30) aufweist, wobei das Verfahren die Schritte umfasst:
- Empfang von Streckendaten (SD) einer geplanten zurückzulegenden Strecke;
- Ermittlung einer voraussichtlich erforderliche Gesamtantriebsleistung (L_p) für die geplante Strecke;
- Ermittlung einer Betriebsstrategie (BS) für die geplante Strecke in Abhängigkeit von der voraussichtlich erforderlichen Gesamtantriebsleistung (L_p), und
- Steuerung der Hybridantriebseinheit (10) entsprechend der ermittelten Betriebsstrategie (BS) zur Zurücklegung der Strecke,
**dadurch gekennzeichnet, dass** die Betriebsstrategie (BS) eine betriebspunktabhängige Umschaltgrenze (206) zwischen einem elektromotorischen Antrieb und einem verbrennungsmotorischem Antrieb umfasst und dass die Ermittlung der Umschaltgrenze (206) so erfolgt, dass, wenn die voraussichtlich erforderliche Gesamtantriebsleistung (L_p) größer oder gleich eines verfügbaren elektrischen Energieinhalts des Energiespeichers (26) ist, ein nach Zurücklegung der Strecke voraussichtlich erreichter Ladungszustand (SOC_end) des Energiespeichers (26) einen vorbestimmten Wert erreicht und gegebenenfalls notwendige verbrennungsmotorischen Antriebsanteile wirkungsgradoptimiert gewählt werden.

2. Verfahren nach Anspruch 1, **dadurch gekennzeichnet, dass** die Ermittlung der betriebspunktabhängigen Umschaltgrenze (206) so erfolgt, dass, wenn die voraussichtlich erforderliche Gesamtantriebsleistung (L_p) für die geplante Strecke größer oder gleich des verfügbaren elektrischen Energieinhalts des Energiespeichers (26) ist, der nach Zurücklegung der Strecke voraussichtlich erreichte Ladungszustand (SOC_end) des Energiespeichers (26) bei höchstens 30% bezogen auf einen Gesamtenergieinhalt des Energiespeichers (26) liegt.

3. Verfahren nach Anspruch 2, **dadurch gekennzeichnet, dass** der nach Zurücklegung der Strecke voraussichtlich erreichte Ladungszustand (SOC_end) des Energiespeichers (26) bei höchstens 20% bezogen auf einen Gesamtenergieinhalt des Energiespeichers (26) liegt.

4. Verfahren nach Anspruch 3, **dadurch gekennzeichnet, dass** der nach Zurücklegung der Strecke voraussichtlich erreichte Ladungszustand (SOC_end) des Energiespeichers (26) bei höchstens 10% bezogen auf einen Gesamtenergieinhalt des Energiespeichers (26) liegt.

5. Verfahren nach einem der vorhergehenden Ansprüche, **dadurch gekennzeichnet, dass** die Ermittlung der Betriebsstrategie (BS) eine Ermittlung eines prognostizierten Verlaufs des Ladungszustandes (SOC_p) des Energiespeichers (26) über die geplante Strecke umfasst und dass während der Steuerung der Hydridantriebseinheit (10) zur Zurücklegung der Strecke wenigstens einmalig ein Vergleich eines aktuellen Ladungszustandes (SOC_ist) mit dem für diesen Zeitpunkt prognostizierten Ladungszustand (SOC_soll) des Energiespeichers (26) durchgeführt wird und bei Feststellen einer Mindestabweichung (±Δ) eine Adaption der betriebspunktabhängigen Umschaltgrenze (206) für die verbleibende Strecke erfolgt.

6. Verfahren nach Anspruch 3, **dadurch gekennzeichnet, dass** der Vergleich des aktuellen Ladezustandes (SOC_ist) mit dem prognostizierten Ladezustandes (SOC_soll) des Energiespeichers (26) und die Adaption der betriebspunktabhängigen Umschaltgrenze (206) in Intervallen durchgeführt, insbesondere jeweils nach Zurücklegung einer vorbestimmten Distanz und/oder Ablauf einer vorbestimmten Fahrdauer.

7. Verfahren nach einem der vorhergehenden Ansprüche, **dadurch gekennzeichnet, dass** die betriebspunktabhängige Umschaltgrenze (206) eine von Drehzahl und Drehmoment einer Antriebsachse (18) oder einer die Antriebsachse (18) antreibende Antriebswelle (16) der Hybridantriebseinheit (10) abhängige Kennlinie ist.

8. Verfahren nach einem der vorhergehenden Ansprüche, **dadurch gekennzeichnet, dass** die betriebspunktabhängige Umschaltgrenze (206) eine erste Umschaltgrenze zur Umschaltung von einem elektromotorischen Antrieb in einen verbrennungsmotorischen Antrieb sowie eine zweite Umschaltgrenze zur Umschaltung von einem verbrennungsmotorischen Antrieb in einen elektromotorischen Antrieb umfasst, wobei die zweite Umschaltgrenze bei niedrigeren Drehzahlen und/oder niedrigeren Drehmomenten liegt als die erste Umschaltgrenze.

9. Verfahren nach einem der vorhergehenden Ansprüche, **dadurch gekennzeichnet, dass** die Streckendaten (SD) der geplanten Strecke zumindest eine der folgenden Informationen umfassen: eine voraussichtliche Entfernung, eine voraussichtliche Fahrtdauer, ein konkretes Ziel, Straßenarten, geographische und/oder topologische Streckeninformation, Bebauungsinformationen, Geschwindigkeitsbegrenzungen, aktuelle Verkehrsinformationen oder erwartete Verkehrsdichte der geplanten Strecke.

10. Verfahren nach einem der vorhergehenden Ansprüche, **dadurch gekennzeichnet, dass** die Streckendaten (SD) der geplanten Strecke von einem Nutzer eingeben werden und/oder von einem Navigationssystem übermittelt werden.

11. Verfahren nach einem der vorhergehenden Ansprüche, **dadurch gekennzeichnet, dass** der Elektromotor (12) neben seinem elektromotorischen Betrieb wahlweise generatorisch zur Erzeugung elektrischer Energie betrieben werden kann und bei der Ermittlung der voraussichtlichen Gesamtantriebsleistung (L_p) für die geplante Strecke eine voraussichtliche generatorisch erzeugte Energie, insbesondere eine voraussichtliche regenerativ erzeugte Energie, berücksichtigt wird.

12. Verfahren nach einem der vorhergehenden Ansprüche, **dadurch gekennzeichnet, dass** zusätzlich ein voraussichtlicher elektrischer Leistungsbedarf (L_BN_p) eines elektrischen Bordnetzes des Fahrzeugs für die geplante Strecke ermittelt wird und bei der Ermittlung der Betriebsstrategie (BS) und/oder des verfügbaren elektrischen Energieinhalts des Energiespeichers (26) berücksichtigt wird.

13. Verfahren nach einen der vorhergehenden Ansprüche, **dadurch gekennzeichnet, dass** ein tatsächlicher Einsatz des Verbrennungsmotors (14), umfassend einen Start und/oder eine Abschaltung desselben, von der Erfüllung weiterer vorbestimmter Randbedingungen abhängig gemacht wird.

14. Verfahren nach Anspruch 13, **dadurch gekennzeichnet, dass** eine Randbedingung erfordert, dass der Verbrennungsmotor (14) eine bestimmte Mindesttemperatur erreicht hat, bevor er wieder abgeschaltet wird, und/oder eine Randbedingung erfordert, dass ein Abgasnachbehandlungssystem auf eine Mindesttemperatur aufzuheizen, ehe der Verbrennungsmotor (14) gestartet wird.

15. Hybridantriebseinheit (10) für ein Fahrzeug, wobei die Hybridantriebseinheit (10) einen Elektromotor (12) als erste Antriebsquelle und einen Verbrennungsmotor (14) als zweite Antriebsquelle aufweist und der Elektromotor (12) durch einen Energiespeicher (26) mit elektrischer Energie versorgt wird und der Energiespeicher (26) einen Ladeanschluss (28) zur Wiederaufladung durch eine externe Stromquelle (30) aufweist, **gekennzeichnet durch** Mittel (36), die eingerichtet sind, die Hybridantriebseinheit (10) gemäß einem Verfahren nach einem der Ansprüche 1 bis 14 zu steuern.

## Claims

1. Method for controlling a hybrid drive unit (10) for a vehicle, wherein the hybrid drive unit (10) has at least one electric motor (12) as a first drive source and an internal combustion engine (14) as a second drive source, and the electric motor (12) is supplied with electrical energy by means of an energy store (26), and the energy store (26) has a charging connection (28) for recharging by means of an external power source (30), wherein the method comprises the steps:
- receiving route data (SD) of a planned route which is to be travelled along;
- determining an overall drive power (L_p) which is expected to be necessary for the planned route;
- determining an operating strategy (BS) for the planned route as a function of the overall drive power (L_p) which is expected to be necessary, and
- controlling the hybrid drive unit (10) in accordance with the determined operating strategy (BS) for travelling along the route,
**characterized in that** the operating strategy (BS) comprises an operating-point-dependent switching limit (206) between an electric motor drive and an internal combustion engine drive, and **in that** the switching limit (206) is determined in such a way that if the overall drive power (L_p) which is expected to be necessary is greater than or equal to an available electrical energy content of the energy store (26), a state of charge (SOC_end) of the energy store (26) which is expected to be reached after the route has been travelled along reaches a predetermined value, and if appropriate necessary internal combustion engine drive components are selected in a way which is optimised in terms of efficiency.

2. Method according to Claim 1, **characterized in that** the operating-point-dependent switching limit (206) is determined in such a way that if the overall drive power (L_p) which is expected to be necessary for the planned route is greater than or equal to the available electrical energy content of the energy store (26), the state of charge (SOC_end) of the energy store (26) which is expected to be reached after the route has been travelled along is at maximum 30% with respect to an overall energy content of the energy store (26).

3. Method according to Claim 2, **characterized in that** the state of charge (SOC_end) of the energy store (26) which is expected to be reached after the route has been travelled along is at maximum 20% with respect to an overall energy content of the energy store (26).

4. Method according to Claim 3, **characterized in that** the state of charge (SOC_end) of the energy store (26) which is expected to be reached after the route has been travelled along is at maximum 10% with respect to an overall energy content of the energy store (26).

5. Method according to one of the preceding claims, **characterized in that** the determination of the operating strategy (BS) comprises determining a predicted profile of the state of charge (SOC_p) of the energy store (26) over the planned route, and **in that** while the hybrid drive unit (10) is being controlled to travel along the route, a comparison of a current state of charge (SOC_curr) is made at least once with the state of charge (SOC_setp) of the energy store (26) which is predicted for this time, and when a minimum deviation (±Δ) is detected, the operating-point-dependent switching limit (206) is adapted for the remaining route.

6. Method according to Claim 3, **characterized in that** the comparison of the current state of charge (SOC_curr) with the predicted state of charge (SOC_setp) of the energy store (26) and the adaptation of the operating-point-dependent switching limit (206) are carried out in intervals, in particular in each case after a predetermined distance has been travelled along and/or the expiry of a predetermined travelling period.

7. Method according to one of the preceding claims, **characterized in that** the operating-point-dependent switching limit (206) is a characteristic curve which is dependent on the rotational speed and torque of a drive axle (18) or of a drive shaft (16), driving the drive axle (18), of the hybrid drive unit (10).

8. Method according to one of the preceding claims, **characterized in that** the operating-point-dependent switching limit (206) comprises a first switching limit for switching from an electric motor drive to an internal combustion engine drive and a second switching limit for switching from an internal combustion engine drive to an electric motor drive, wherein the second switching limit is at lower rotational speeds and/or lower torques than the first switching limit.

9. Method according to one of the preceding claims, **characterized in that** the route data (SD) of the planned route comprises at least one of the following information items: an expected distance, an expected travel duration, a specific destination, types of road, geographic and/or topological route information, information on the land development, speed limits, current traffic information or expected traffic density of the planned route.

10. Method according to one of the preceding claims, **characterized in that** the route data (SD) of the planned route are input by a user and/or transmitted by a navigation system.

11. Method according to one of the preceding claims, **characterized in that** the electric motor (12) can optionally be operated as a generator for generating electrical energy in addition to its electric motor operating mode, and when the expected overall drive power (L_p) for the planned route is determined, an expected amount of energy which is generated by generator, in particular an expected amount of energy which is generated regeneratively, is taken into account.

12. Method according to one of the preceding claims, **characterized in that** in addition, an expected electrical power demand (L_BN_p) of an electrical on-board power system of the vehicle is determined for the planned route and is taken into account in the determination of the operating strategy (BS) and/or of the available electrical energy content of the energy store (26).

13. Method according to one of the preceding claims, **characterized in that** an actual use of the internal combustion engine (14), comprising a start and/or a deactivation thereof, is made dependent on the satisfaction of further predetermined boundary conditions.

14. Method according to Claim 13, **characterized in that** a boundary condition requires that the internal combustion engine (14) has reached a specific minimum temperature before it is deactivated again and/or a boundary condition requires that an exhaust-gas aftertreatment system is heated to a minimum temperature before the internal combustion engine (14) is started.

15. Hybrid drive unit (10) for a vehicle, wherein the hybrid drive unit (10) has an electric motor (12) as a first drive source and an internal combustion engine (14) as a second drive source, and the electric motor (12) is supplied with electrical energy by an energy store (26), and the energy store (26) has a charging connection (28) for recharging by means of an external power source (30), **characterized by** means (36) which are configured to control the hybrid drive unit (10) in accordance with a method according to one of Claims 1 to 14.

## Revendications

1. Procédé de commande d'une unité d'entraînement hybride (10) pour un véhicule, l'unité d'entraînement hybride (10) comprenant au moins un moteur électrique (12) comme première source d'entraînement et un moteur à combustion interne (14) comme deuxième source d'entraînement, et le moteur électrique (12) étant alimenté en énergie électrique par un accumulateur d'énergie (26) et l'accumulateur d'énergie (26) comportant une borne de charge (28) destinée à la recharge par une source de courant extérieure (30), le procédé comprenant les étapes suivantes :
- réception de données de trajet (SD) d'un trajet planifié à parcourir ;
- détermination d'une puissance d'entraînement totale (L_p) probablement requise pour le trajet planifié ;
- détermination d'une stratégie de fonctionnement (BS) pour le trajet planifié en fonction de la puissance d'entraînement totale (L_p) probablement requise, et
- commande de l'unité d'entraînement hybride (10) conformément à la stratégie de fonctionnement déterminée (BS) pour parcourir le trajet,
**caractérisé en ce que** la stratégie de fonctionnement (BS) comprend une limite de commutation (206) dépendant du point de fonctionnement entre un entraînement par moteur électrique et un entraînement par moteur à combustion interne et **en ce que** la détermination de la limite de commutation (206) est effectuée de telle sorte que, lorsque la puissance d'entraînement totale (L_p) probablement requise est supérieure ou égale à un contenu énergétique électrique disponible de l'accumulateur d'énergie (26), un état de charge (SOC_end), probablement atteint après avoir parcouru le trajet, de l'accumulateur d'énergie (26) atteint une valeur prédéfinie et des parties d'entraînement éventuellement nécessaires du moteur à combustion interne sont choisies pour être optimisées en termes d'efficacité.

2. Procédé selon la revendication 1, **caractérisé en ce que** la détermination de la limite de commutation (206) dépendant du point de fonctionnement est effectuée de telle sorte que, lorsque la puissance d'entraînement totale (L_p) probablement requise pour le trajet planifié est supérieure ou égale au contenu énergétique électrique disponible de l'accumulateur d'énergie (26), l'état de charge (SOC_end), probablement atteint après avoir parcouru le trajet, de l'accumulateur d'énergie (26) est de 30 % maximum, sur la base d'un contenu énergétique total de l'accumulateur d'énergie (26).

3. Procédé selon la revendication 2, **caractérisé en ce que** l'état de charge (SOC_end), probablement atteint après avoir parcouru le trajet, de l'accumulateur d'énergie (26) est de 20 % maximum, sur la base d'un contenu énergétique total de l'accumulateur d'énergie (26) .

4. Procédé selon la revendication 3, **caractérisé en ce que** l'état de charge (SOC_end), probablement atteint après avoir parcouru le trajet, de l'accumulateur d'énergie (26) est de 10 % maximum, sur la base d'un contenu énergétique total de l'accumulateur d'énergie (26) .

5. Procédé selon l'une des revendications précédentes, **caractérisé en ce que** la détermination de la stratégie de fonctionnement (BS) comprend une détermination d'une variation prédite de l'état de charge (SOC_p) de l'accumulateur d'énergie (26) sur le trajet planifié et **en ce qu'**une comparaison entre un état de charge actuel (SOC_réel) et l'état de charge (SOC_consigne), prédit pour cet instant, de l'accumulateur d'énergie (26) est effectuée au moins une fois lors de la commande de l'unité d'entraînement hybride (10) pour le parcours du trajet et, lors de la détection d'un écart minimal (±Δ), une adaptation de la limite de commutation (206), dépendant du point de fonctionnement, est effectuée pour le trajet restant.

6. Procédé selon la revendication 3, **caractérisé en ce que** la comparaison de l'état de charge actuel (SOC_réel) avec l'état de charge prédit (SOC_consigne) de l'accumulateur d'énergie (26) et l'adaptation de la limite de commutation (206), dépendant du point de fonctionnement, sont effectuées par intervalles, notamment à chaque fois après avoir parcouru une distance prédéterminée et/ou au bout d'un temps de conduite prédéterminé.

7. Procédé selon l'une des revendications précédentes, **caractérisé en ce que** la limite de commutation (206), dépendant du point de fonctionnement, est une caractéristique qui dépend de la vitesse de rotation et du couple d'un essieu d'entraînement (18) ou d'un arbre d'entraînement (16), entraînant l'essieu d'entraînement (18), de l'unité d'entraînement hybride (10).

8. Procédé selon l'une des revendications précédentes, **caractérisé en ce que** la limite de commutation (206), dépendant du point de fonctionnement, comprend une première limite de commutation destinée à la commutation d'un entraînement par moteur électrique vers un entraînement par moteur à combustion interne et une deuxième limite de commutation destinée à la commutation d'un entraînement par moteur à combustion interne vers un entraînement par moteur électrique, la deuxième limite de commutation étant à des vitesses de rotation plus faibles et/ou des couples plus faibles que la première limite de commutation.

9. Procédé selon l'une des revendications précédentes, **caractérisé en ce que** les données de trajet (SD) du trajet planifié comprennent l'une au moins des informations suivantes : une distance probable, une durée de conduite probable, une destination spécifique, des types de route, une information de trajet géographique et/ou topologique, des informations de constructions, des limitations de vitesse, des informations sur le trafic actuelles ou une densité de trafic attendue du trajet planifié.

10. Procédé selon l'une des revendications précédentes, **caractérisé en ce que** les données de trajet (SD) du trajet planifié sont saisies par un utilisateur et/ou transmises par un système de navigation.

11. Procédé selon l'une des revendications précédentes, **caractérisé en ce que** le moteur électrique (12) peut être utilisé, en complément de son fonctionnement en moteur électrique, éventuellement comme générateur pour générer de l'énergie électrique et, lors de la détermination de la puissance d'entraînement totale probable (L_p) pour le trajet planifié une énergie probable générée par générateur, en particulier une énergie régénérative probable, est prise en compte.

12. Procédé selon l'une des revendications précédentes, **caractérisé en ce qu'**un besoin de puissance électrique probable (L_BN_p) d'un réseau de bord électrique du véhicule est en outre déterminé pour le trajet planifié et est pris en compte lors de la détermination de la stratégie de fonctionnement (BS) et/ou du contenu énergétique électrique disponible de l'accumulateur d'énergie (26).

13. Procédé selon l'une des revendications précédentes, **caractérisé en ce qu'**une utilisation réelle du moteur à combustion interne (14), comprenant un démarrage et/ou un arrêt de celui-ci, est subordonnée au respect d'autres conditions limites prédéterminées.

14. Procédé selon la revendication 13, **caractérisé en ce qu'**une condition limite nécessite que le moteur à combustion interne (14) ait atteint une certaine température minimale avant qu'il soit à nouveau arrêté, et/ou une condition limite nécessite qu'un système de post-traitement de gaz d'échappement soit chauffé à une température minimale avant que le moteur (14) à combustion interne soit démarré.

15. Unité d'entraînement hybride (10) destinée à un véhicule, l'unité d'entraînement hybride (10) comportant un moteur électrique (12) comme première source d'entraînement et un moteur à combustion interne (14) comme deuxième source d'entraînement et le moteur électrique (12) étant alimenté en énergie électrique par un accumulateur d'énergie (26) et l'accumulateur d'énergie (26) comportant une borne de charge (28) destinée à la recharge par une source d'alimentation extérieure (30), **caractérisée par** des moyens (36) adaptés pour commander l'unité d'entraînement hybride (10) suivant un procédé selon l'une des revendications 1 à 14.
